# EUROPEAN PATENT APPLICATION

(11) **EP 4 023 407 A1**
(43) Date of publication of application: **06.07.2022**
(21) Application number: 20856362.7
(22) Date of filing: 26.08.2020
(51) Int. Cl.: B29C 39/18, B29C 45/14, B29D 23/00, F16L 3/00

(54) **METHOD FOR MANUFACTURING RESIN PIPE WITH FIXING MEMBER, DEVICE FOR MANUFACTURING RESIN PIPE WITH FIXING MEMBER, AND RESIN PIPE WITH FIXING MEMBER**

(30) Priority: 27.08.2019 JP 2019154743
(71) Applicant: Sanoh Industrial Co., Ltd., Tokyo 150-0013 (JP)
(72) Inventor: NAKAMOTO, Yuji, Koga-shi, Ibaraki 306-0041 (JP); OBA, Fuminori, Koga-shi, Ibaraki 306-0041 (JP); MORI, Yuya, Koga-shi, Ibaraki 306-0041 (JP)
(74) Representative: dompatent von Kreisler Selting Werner - Partnerschaft von Patent- und Rechtsanwälten mbB
(86) International application number: PCT/JP2020/032247
(87) International publication number: WO 2021/039867

(57) **Abstract**

A fixing member-attached resin pipe manufacturing method including a process of placing a part of a resin pipe inside a mold for molding a fixing member, and a process of causing a molten resin to flow into the mold so as to mold the fixing member in a state in which the resin pipe is pressurized from an inside of the resin pipe by supplying a fluid into the resin pipe.

## Description

### Technical Field

The present disclosure related to a fixing member-attached resin pipe manufacturing method, a fixing member-attached resin pipe manufacturing device, and a fixing member-attached resin pipe.

### Background Art

A known method of manufacturing a bracketed resin pipe involves placing a part of a resin pipe inside a mold used for bracket molding and filling a molten resin into the mold to mold a bracket, such that the resin pipe and the bracket are integral to one another (see, for example, Japanese Utility Model Application Laid-Open (JP-U) Nos. H03-77882 and H03-77884).

### SUMMARY OF INVENTION

### Technical Problem

When a part of a resin pipe is placed inside a mold, a section of the resin pipe that has been placed inside the mold may heat up and become soft (soften) due to heating (pre-heating) the mold prior to causing a molten resin to flow therein. If the molten resin flows into the mold in a state in which the section of the resin pipe that has been placed inside the mold has become soft in such a manner, this section of the resin pipe might undergo deformation due to the inflow pressure of the molten resin. Thus, technology is known in which a mandrel (a metal core) is placed inside the resin pipe when a bracket is provided at the resin pipe in order to prevent such deformation of the resin pipe. However, if a mandrel is placed inside the resin pipe, operations to place the mandrel inside the resin pipe and to extract the mandrel from inside the resin pipe are required, such that the manufacturing process becomes more complex. Moreover, in resin pipes including a location with a different pipe diameter, such as a bellows shaped pipe, it may not be possible to source a mandrel with a suitable shape, such that the internal diameter of the pipe at this location and the external diameter of the mandrel do not match. A processing constraint in which the shape at this location cannot be maintained by the mandrel arises as a result.

An object of the present disclosure is to provide a fixing member-attached resin pipe manufacturing method, a fixing member-attached resin pipe manufacturing device, and a fixing member-attached resin pipe manufactured by this manufacturing method or manufacturing device that are capable of suppressing deformation of a resin pipe when molding a fixing member such as a bracket or a clamp to the resin pipe, without employing a mandrel.

### Solution to Problem

A fixing member-attached resin pipe manufacturing method of one aspect of the present disclosure includes a process of placing a part of a resin pipe inside a mold for molding a fixing member, and a process of causing a molten resin to flow into the mold so as to mold the fixing member in a state in which the resin pipe is pressurized from an inside of the resin pipe by supplying a fluid into the resin pipe. Note that a "pressurized state" refers here to a state in which the resin pipe is supported from the inside thereof by the fluid that has been filled into an inner part of the resin pipe so as to suppress deformation of the resin pipe when the molten resin has been filled into the mold. The pressure of the fluid is set in consideration of the properties of the fluid.

A fixing member-attached resin pipe manufacturing device of another aspect of the present disclosure includes a mold for molding a fixing member to a part of a resin pipe, and a pressurization device configured to supply a fluid into the resin pipe so as to pressurize the resin pipe from an inside of the resin pipe.

A fixing member-attached resin pipe of yet another aspect of the present disclosure includes a resin pipe formed with a bend section and a fixing member provided at the bend section. The fixing member includes a ring-shaped section that is ring shaped and has an inner peripheral face that is in close contact with an outer peripheral face of the bend section. Advantageous Effects of Invention

As described above, the present disclosure enables the fixing member-attached resin pipe manufacturing method, the fixing member-attached resin pipe manufacturing device, and the fixing member-attached resin pipe manufactured by this manufacturing method or manufacturing device to be provided that are capable of suppressing deformation of the resin pipe due to the heat inside the mold or the inflow pressure of the molten resin when molding the fixing member to the resin pipe, without employing a mandrel.

### BRIEF DESCRIPTION OF DRAWINGS

Fig. 1 is a perspective view of a bracketed resin pipe manufactured by a bracketed resin pipe manufacturing method according to an exemplary embodiment of the present disclosure.
Fig. 2 is an enlarged perspective view of a section of the bracketed resin pipe illustrated in Fig. 1 indicated by an arrow 2.
Fig. 3 is a cross-section along line 3-3 indicated by arrows in Fig. 2.
Fig. 4 is an explanatory diagram for explaining a process to mold a resin pipe using an extruder.
Fig. 5 is an explanatory diagram for explaining a manufacturing process of a bracketed resin pipe.
Fig. 6 is an explanatory diagram for explaining a manufacturing process of a bracketed resin pipe.
Fig. 7 is a cross-section along line 7-7 in Fig. 6.
Fig. 8 is an explanatory diagram for explaining a manufacturing process of a bracketed resin pipe.
Fig. 9 is an explanatory diagram for explaining a manufacturing process of a bracketed resin pipe.
Fig. 10 is a cross-section along line 10-10 in Fig. 9.
Fig. 11 is an explanatory diagram for explaining a manufacturing process of a bracketed resin pipe.
Fig. 12 is a cross-section of a modified example of a bracketed resin pipe.
Fig. 13 is a cross-section along line 13-13 indicated by arrows in Fig. 12.
Fig. 14 is a perspective view (a perspective view corresponding to Fig. 2) of another modified example of a bracketed resin pipe.
Fig. 15 is an explanatory diagram for explaining a manufacturing process of the bracketed resin pipe illustrated in Fig. 14.
Fig. 16 is a plan view of a bracket placement section of yet another modified example of a bracketed resin pipe.

### DESCRIPTION OF EMBODIMENTS

Explanation follows regarding a bracketed resin pipe manufacturing method according to an exemplary embodiment of the present disclosure, with reference to the drawings. First, explanation follows regarding a bracketed resin pipe manufactured by the bracketed resin pipe manufacturing method of the present exemplary embodiment, followed by explanation regarding a manufacturing device employed to manufacture the bracketed resin pipe, and the bracketed resin pipe manufacturing method itself. Note that the bracketed resin pipe of the present exemplary embodiment is an example of a fixing member-attached resin pipe of the present disclosure. Moreover, the bracketed resin pipe manufacturing device and the bracketed resin pipe manufacturing method of the present exemplary embodiment are respective examples of a fixing member-attached resin pipe manufacturing device and a fixing member-attached resin pipe manufacturing method of the present disclosure.

### Bracketed Resin Pipe

A bracketed resin pipe 20 of the present exemplary embodiment is a pipe that is for example employed in a fuel pipe system or a cooling pipe system of a vehicle. Note that application of a bracketed resin pipe manufactured by the manufacturing method of the present disclosure is not limited to the above application, and the bracketed resin pipe may be applied to any pipe system that employs a resin pipe.

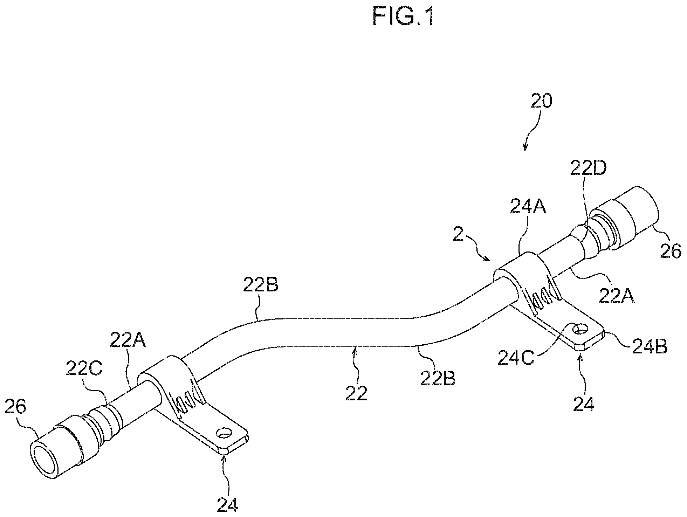

As illustrated in Fig. 1, the bracketed resin pipe 20 includes a resin pipe 22 and brackets 24. The brackets 24 of the present exemplary embodiment are an example of a fixing member of the present disclosure.

As illustrated in Fig. 1, the resin pipe 22 includes straight sections (straight pipe sections) 22A, and bend sections (bending pipe sections) 22B that are linked to the respective straight sections 22A. In the present exemplary embodiment, the straight sections 22A are respectively formed at both axial direction end sides of the resin pipe 22, and the brackets 24 are integrally formed at the straight sections 22A.

Connectors 26 for connecting to other pipes are respectively attached to both end portions of the resin pipe 22.

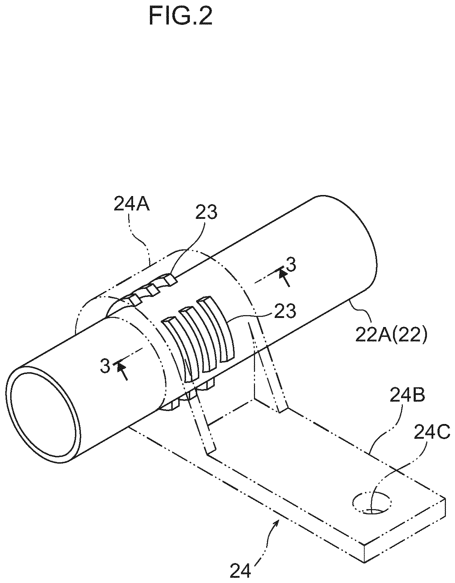

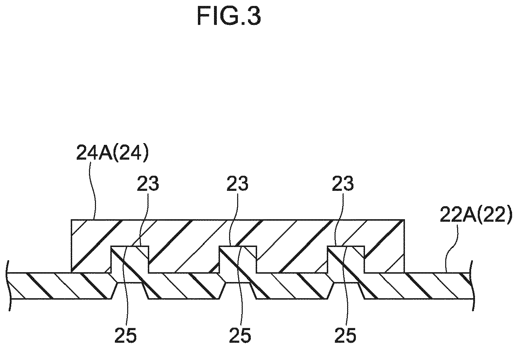

As illustrated in Fig. 2, projecting portions 23 that project out from an outer peripheral face of each of the straight sections 22A are provided at a section where the corresponding bracket 24 is formed at the straight section 22A of the resin pipe 22. Plural (three around a circumferential direction in the present exemplary embodiment) of projecting portions 23 are provided so as to be spaced apart in the circumferential direction of the resin pipe 22. As illustrated in Fig. 3, plural of projecting portions 23 (three along an axial direction in the present exemplary embodiment) are also provided so as to be spaced apart along the axial direction of the resin pipe 22.

As illustrated in Fig. 1 and Fig. 2, the respective brackets 24 are integrally formed at the straight sections 22A at both axial direction end sides of the resin pipe 22. Each of the brackets 24 includes a circular ring-shaped retaining section 24A that retains the corresponding straight section 22A of the resin pipe 22, and a plate-shaped attachment section 24B that extends along a direction tangent to the retaining section 24A. As illustrated in Fig. 3, an inner peripheral face of the retaining section 24A is in close contact with an outer peripheral face of the resin pipe 22 without any gaps therebetween. Recessed portions 25 with corresponding shapes to the projecting portions 23 are formed in the inner peripheral face of the retaining section 24A, and the projecting portions 23 of the resin pipe 22 are retained in the recessed portions 25. Positional misalignment of the bracket 24 with respect to the resin pipe 22 (positional misalignment in the axial direction and the circumferential direction of the resin pipe 22) is suppressed as a result. An attachment hole 24C for attaching the bracket 24 to a non-illustrated attachment target is formed in the attachment section 24B.

### Bracketed Resin Pipe Manufacturing Device

Next, explanation follows regarding a manufacturing device 30 employed to manufacture the bracketed resin pipe 20.

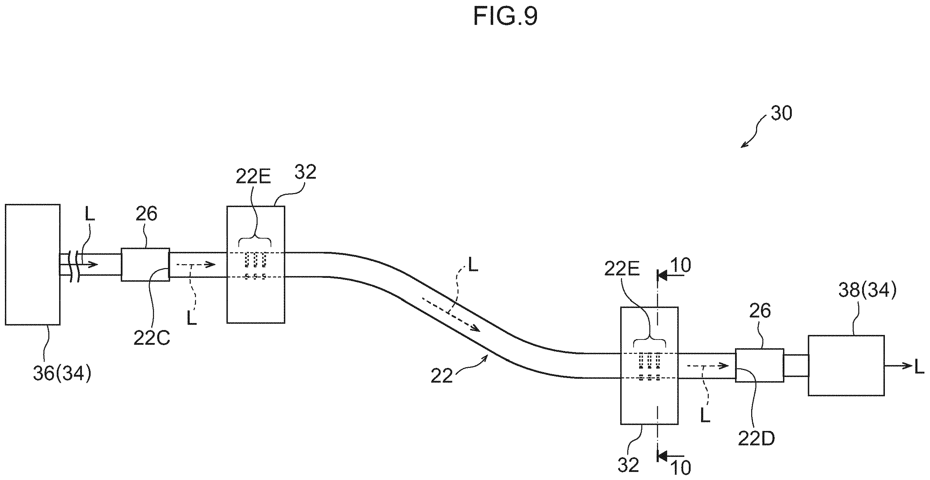

As illustrated in Fig. 9, the manufacturing device 30 includes molds 32 and a pressurization device 34.

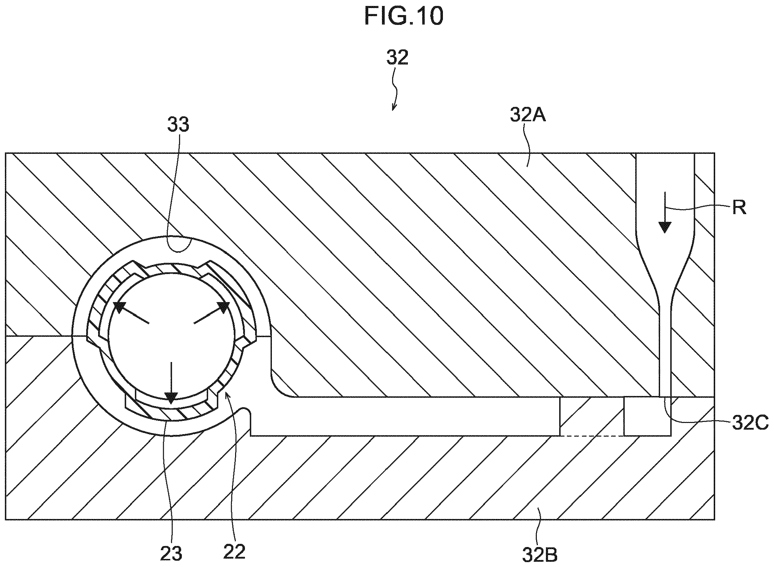

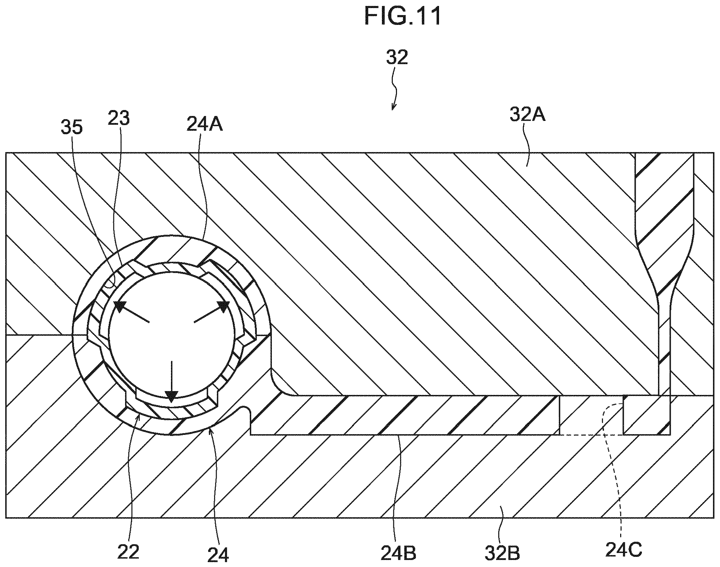

The molds 32 are molds for molding the brackets 24 at parts of the resin pipe 22. Each of the molds 32 includes an upper mold 32A and a lower mold 32B. As illustrated in Fig. 10 and Fig. 11, the upper mold 32A and the lower mold 32B are respectively formed with mold recesses configuring a hollow area 33 that serves as the shape of the bracket 24 in a state in which a part of the resin pipe 22 has been placed in inner parts of the upper mold 32A and the lower mold 32B and the upper mold 32A and the lower mold 32B are closed. An inflow port 32C for a molten resin R is formed in the upper mold 32A. The molten resin R flows into the hollow area 33 through this inflow port 32C.

The pressurization device 34 is a device for supplying a fluid L into the resin pipe 22 and pressurizing the resin pipe 22 from the inside thereof. As illustrated in Fig. 9, the pressurization device 34 includes a supply section 36 and an adjustment section 38.

As illustrated in Fig. 9, the supply section 36 is an instrument that supplies the cooling fluid L into the resin pipe 22 through one axial direction end portion 22C of the resin pipe 22. Specifically, the supply section 36 is configured by a compressor connected through the connector 26 attached to the one end portion 22C of the resin pipe 22, and the cooling fluid L that has been compressed by this compressor is supplied into the resin pipe 22. Note that "cooling fluid" refers here to a fluid set to a lower temperature than a heated temperature of the molds 32 both prior to and during the molten resin R flowing in. Note that from the perspective of suppressing softening of the parts of the resin pipe 22 placed inside the molds 32, described later, the temperature of the cooling fluid L is preferably set to within a range between -30°C and 20°C. The cooling fluid L may be either a gas or a liquid, and air is employed as the cooling fluid L in the present exemplary embodiment. Note that nitrogen gas or the like may be employed as the cooling fluid L.

As illustrated in Fig. 9, the adjustment section 38 is an instrument for expelling the cooling fluid L inside the resin pipe 22 through another axial direction end portion 22D of the resin pipe 22 so as to adjust the pressure inside the resin pipe 22. Specifically, the adjustment section 38 is configured by a pressure adjustment valve connected through the connector 26 attached to the other end portion 22D of the resin pipe 22.

The manufacturing device 30 also includes a extruder 40 for molding the resin pipe 22, and molds 42 for molding the projecting portions 23 on the resin pipe 22. The molds 42 are vacuum-molding molds that form the projecting portions 23 by vacuum molding the resin pipe 22 in a softened state directly after being extruded from the extruder 40. Specifically, sections of the softened resin pipe 22 where the brackets 24 are to be molded are placed inside the molds 42, and vacuum drawn into the molds 42. The softened resin pipe 22 is thereby drawn into recessed portions provided at the molds 42 for molding the projecting portions 23, such that the projecting portions 23 are formed (transferred) to the resin pipe 22.

### Bracketed Resin Pipe Manufacturing Method

Next, explanation follows regarding a manufacturing method of the bracketed resin pipe 20 employing the manufacturing device 30.

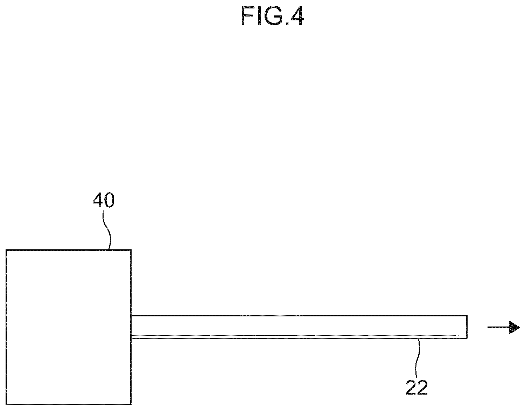

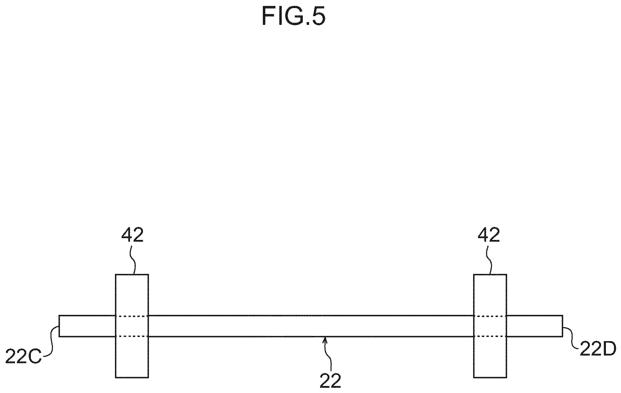

In the bracketed resin pipe 20, first, a straight resin pipe 22 is extrusion-molded using the extruder 40, as illustrated in Fig. 4. The resin pipe 22 is then cut to a predetermined dimension, as illustrated in Fig. 5.

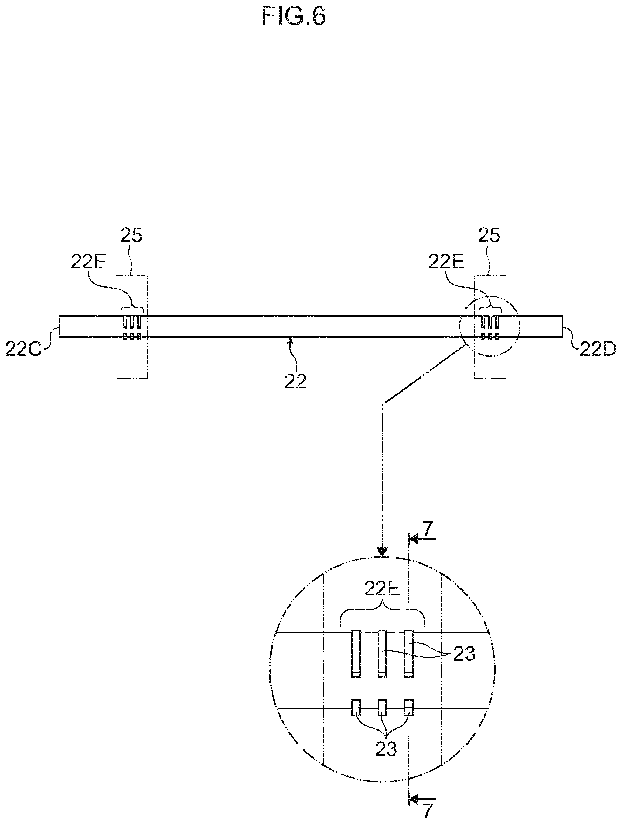

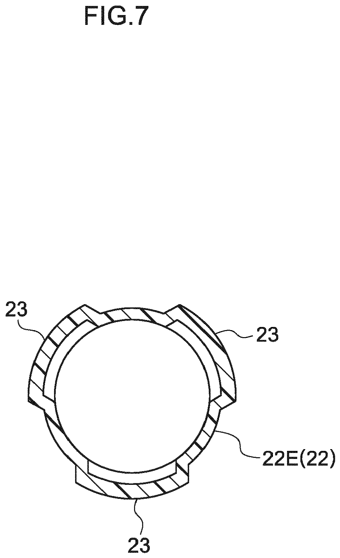

Next, as illustrated in Fig. 6, the projecting portions 23 that project out from the outer peripheral face of the resin pipe 22 are formed at the sections (hereafter "planned mold locations" as appropriate) 22E of the resin pipe 22 where the brackets 24 are to be molded. Specifically, directly after being extruded from the extruder 40, the planned mold locations 22E of the resin pipe 22 in the softened state are placed inside the molds 42 and vacuum drawn to form the projecting portions 23 at the planned mold locations 22E (see Fig. 7).

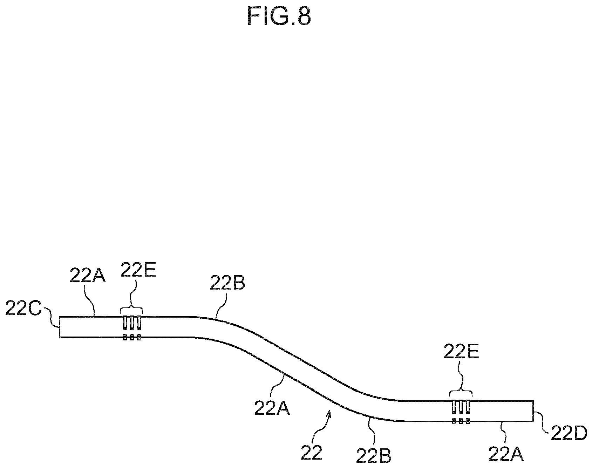

Next, as illustrated in Fig. 8, the resin pipe 22 is bent at predetermined positions to form the bend sections 22B to the resin pipe 22.

Next, as illustrated in Fig. 9, the connectors 26 are respectively press-fit to both axial direction end portions of the resin pipe 22. The supply section 36 of the manufacturing device 30 is then connected to the connector 26 on the one end portion 22C side of the resin pipe 22, and the adjustment section 38 is connected to the connector 26 on the other end portion 22D side of the resin pipe 22. The cooling fluid L is then supplied into the resin pipe 22 so as to both pressurize and cool the resin pipe 22 from the inside thereof. Note that the pressure applied to the resin pipe 22 is preferably set to a pressure that is less than a maximum withstand internal pressure of the resin pipe 22 and set such that the resin pipe 22 can withstand the inflow pressure of the molten resin R.

Next, in a state in which the resin pipe 22 is pressurized and has also been cooled from the inside thereof by supplying the cooling fluid L into the resin pipe 22, the planned mold locations 22E of the resin pipe 22 are placed inside the respective molds 32 for molding the brackets 24 (see Fig. 9 to Fig. 11).

Next, in the state in which the resin pipe 22 is pressurized and has also been cooled from the inside thereof, the molten resin R is caused to flow into the hollow areas 33 of the molds 32 so as to mold the brackets 24. Note that the planned mold locations 22E of the resin pipe 22 that have been placed inside the respective molds 32 function as elements that support inner peripheral sides of the brackets 24 when the brackets 24 are being molded.

After the molten resin R filled into the hollow areas 33 has cooled and hardened, the upper molds 32A and the lower molds 32B are opened, and the brackets 24 are removed from the molds together with the resin pipe 22. Manufacture of the bracketed resin pipe 20 is thereby complete.

Note that in the present exemplary embodiment, the resin pipe 22 is pressurized and also cooled from the inside thereof during a period spanning from prior to the planned mold locations 22E of the resin pipe 22 being placed inside the molds 32 to the resin pipe 22 and the brackets 24 being removed from the molds 32.

Next, explanation follows regarding operation and advantageous effects of the present exemplary embodiment.

In the manufacturing method of the bracketed resin pipe 20 of the present exemplary embodiment, the molten resin R is caused to flow into the hollow areas 33 of the molds 32 in the state in which the resin pipe 22 is pressurized from the inside thereof by supplying the cooling fluid L into the resin pipe 22. Thus even if the sections (sections including the planned mold locations 22E) of the resin pipe 22 that have been placed inside the molds 32 soften due to heat (pre-heating) inside the molds 32, deformation of the resin pipe 22 due to the inflow pressure of the molten resin R is better suppressed than for example manufacturing methods in which the planned mold locations 22E of a resin pipe 22 that has both ends exposed to the atmosphere are placed inside the molds 32 and the molten resin R is made to flow into the molds 32. Thus, by pressurizing the resin pipe 22 from the inside thereof by supplying the cooling fluid L into the resin pipe 22 when molding the brackets 24 to the resin pipe 22, the above-described manufacturing method enables deformation of the resin pipe 22 to be suppressed without employing a mandrel.

In particular, in the manufacturing method of the present exemplary embodiment, the cooling fluid L is supplied into the resin pipe 22 such that the resin pipe 22 is pressurized and also cooled from the inside thereof, thereby suppressing softening of the resin pipe 22 due to heat inside the molds 32. This enables deformation of the resin pipe 22 when molding the brackets 24 to the resin pipe 22 to be further suppressed.

Moreover, in the manufacturing method of the present exemplary embodiment, the planned mold locations 22E of the resin pipe 22 are placed inside the molds 32 in the state in which the resin pipe 22 is pressurized and has also been cooled from the inside thereof. Thus, softening of the parts of the resin pipe 22 placed inside the molds 32 is suppressed from an initial placement stage, unlike for example manufacturing methods in which the resin pipe 22 is pressurized and cooled from the inside thereof after the planned mold locations 22E of the resin pipe 22 have been placed inside the molds 32. This enables deformation of the resin pipe 22 when molding the brackets 24 to the resin pipe 22 to be further suppressed.

Moreover, in the manufacturing method of the present exemplary embodiment, the projecting portions 23 are provided at the planned mold locations 22E of the resin pipe 22. By forming the recessed portions 25 corresponding to the projecting portions 23 to the brackets 24 and retaining the projecting portions 23 in the recessed portions 25, positional misalignment of the brackets 24 with respect to the resin pipe 22 is suppressed. Thus, positional misalignment of the brackets 24 with respect to the resin pipe 22 (positional misalignment in the axial direction and the circumferential direction of the resin pipe 22) is suppressed both when the brackets 24 are taken out from inside the molds 32 (during mold removal), and after the resin pipe 22 has been attached to an attachment target using the brackets 24. Moreover, in the bracketed resin pipe 20, positional misalignment of the brackets 24 with respect to the resin pipe 22 is suppressed as described above, thereby facilitating an attachment operation to the attachment target.

In particular, in the manufacturing method of the present exemplary embodiment, the plural projecting portions 23 are provided at the planned mold locations 22E of the resin pipe 22 so as to be spaced apart in the circumferential direction of the resin pipe 22. Thus, positional misalignment of the brackets 24 with respect to the resin pipe 22 (positional misalignment in the axial direction and the circumferential direction of the resin pipe 22) is further suppressed when the brackets 24 are taken out from inside the molds 32 (during mold removal), and after the resin pipe 22 has been attached to the attachment target using the brackets 24.

Although the projecting portions 23 are formed at the resin pipe 22 prior to bending the resin pipe 22 in the manufacturing method of the exemplary embodiment described above, the present disclosure is not limited to this configuration. The projecting portions 23 may be formed at the resin pipe 22 in a softened state after the softened resin pipe 22 has been bent to form the bend sections 22B.

Although the projecting portions 23 are formed at the resin pipe 22 by vacuum molding in the manufacturing method of the exemplary embodiment described above, the present disclosure is not limited to this configuration. For example, the projecting portions 23 may be formed at the resin pipe 22 by joining (including by welding or bonding) resin protrusions to the outer peripheral face of the resin pipe 22.

Although the projecting portions 23 are formed at the resin pipe 22 in the softened state by vacuum molding in the manufacturing method of the exemplary embodiment described above, the present disclosure is not limited to this configuration. For example, recessed portions may be formed at the outer peripheral face of the softened resin pipe 22 by vacuum molding. In cases in which such recessed portions are formed at the outer peripheral face of the resin pipe 22, molten resin flows into the recessed portions when molding the brackets so as to form projecting portions in the molded brackets that are retained in the recessed portions. Forming recessed portions in the resin pipe 22 in this manner enables positional misalignment of the brackets 24 with respect to the resin pipe 22 to be suppressed similarly to cases in which the projecting portions 23 are formed.

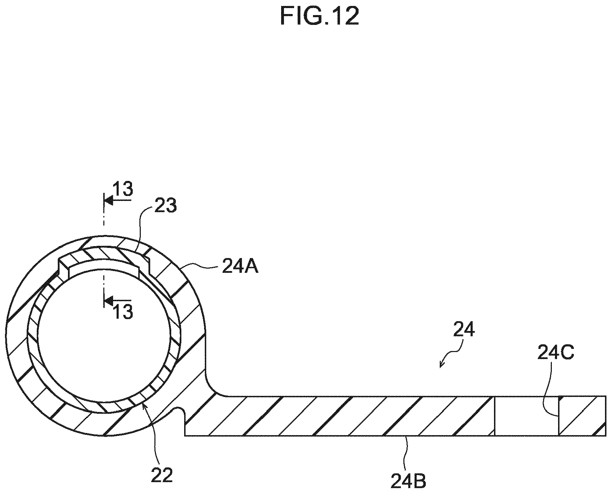

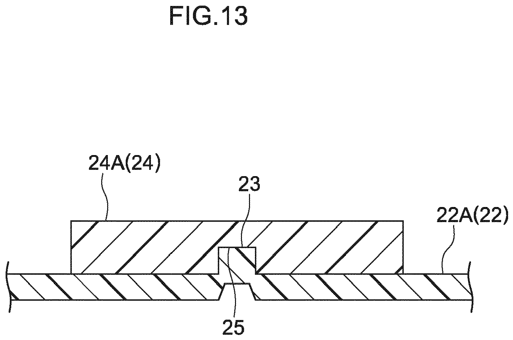

Although the plural projecting portions 23 are formed at the planned mold locations 22E of the resin pipe 22 around the circumferential direction and along the axial direction of the resin pipe 22 in the manufacturing method of the exemplary embodiment described above, the present disclosure is not limited to this configuration. For example, as illustrated in Fig. 12 and Fig. 13, configuration may be such that only one projecting portion 23 is formed at each of the planned mold locations 22E of the resin pipe 22. Moreover, the shape of the projecting portions provided at the outer peripheral face of the resin pipe 22 is not limited to the shape of the projecting portions 23 described in the above exemplary embodiment. As long as the shape of the projecting portions enables positional misalignment of the brackets to be suppressed, the shape may be a circular ring shape, an elliptical ring shape, or a polygonal ring shape.

Although the resin pipe 22 is pressurized and also cooled from the inside thereof during a period spanning from prior to the planned mold locations 22E of the resin pipe 22 being placed inside the molds 32 to the resin pipe 22 and the brackets 24 being removed from the molds 32 in the exemplary embodiment described above, the present disclosure is not limited to this configuration. For example, the resin pipe 22 may be pressurized and also cooled from the inside thereof during a period spanning from prior to the planned mold locations 22E of the resin pipe 22 being placed inside the molds 32 to after completion of the molten resin R being filled into the hollow areas 33 of the molds 32.

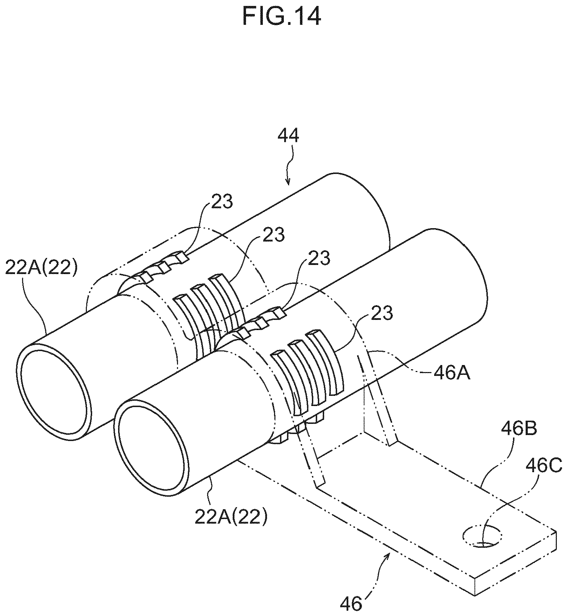

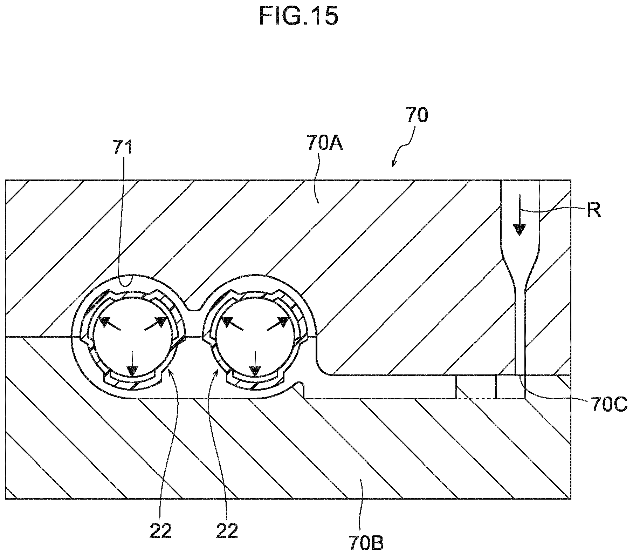

Although the brackets 24 are integrally formed at a single resin pipe 22 in the exemplary embodiment described above, the present disclosure is not limited to this configuration. For example, as in bracketed resin piping 44 illustrated in Fig. 14, a bracket 46 may be integrally formed at plural (two) resin pipes 22. The bracket 46 includes a retaining section 46A that retains the two resin pipes 22, an attachment section 46B, and an attachment hole 46C. Such a bracket 46 is formed by a mold 70 such as that illustrated in Fig. 15. The mold 70 includes an upper mold 70A, a lower side 70B, an inflow port 70C for molten resin R, and a hollow area 71 for molding the bracket 46. Note that when molding the bracket 46, the two resin pipes 22 are pressurized and cooled from the respective insides thereof by supplying the cooling fluid L as the bracket 46 is molded.

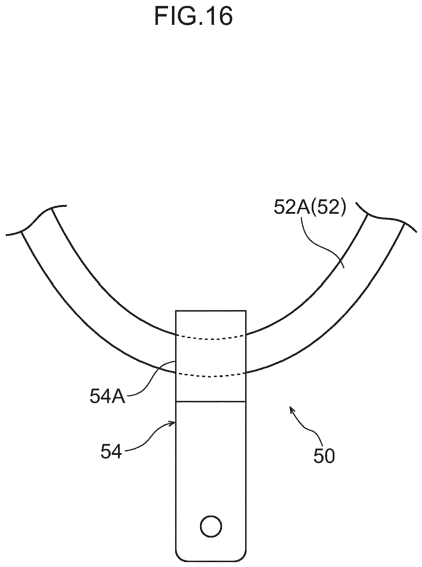

Although the brackets 24 are integrally formed at the straight sections 22A of the resin pipe 22 in the manufacturing method of the exemplary embodiment described above, the present disclosure is not limited to this configuration. For example, as illustrated in Fig. 16, a bracket 54 may be integrally formed at a gently curved bend section 52A of a resin pipe 52. In such cases, since the bracket 54 is molded to the bend section 52A of the resin pipe 52, even if a positional misalignment prevention structure such as the projecting portions 23 described in the above exemplary embodiment is not provided, an inner peripheral face of a retaining section 54A, this being an example of a ring-shaped section, of the bracket 54 is in close contact (the entire inner peripheral face is preferably in close contact) with an outer peripheral face of the bend section 52A of the resin pipe 52, such that positional misalignment (positional misalignment in the axial direction and the circumferential direction of the resin pipe 22) of the bracket 54 with respect to the resin pipe 52 is suppressed. Thus, positional misalignment of the bracket 54 with respect to the resin pipe 52 is suppressed both during mold removal and after the resin pipe 52 has been attached to an attachment target using the bracket 54. Moreover, such a bracketed resin pipe 50 in which the bracket 54 is provided at the bend section 52A facilitates an attachment operation to the attachment target, since positional misalignment of the bracket 54 with respect to the resin pipe 52 is suppressed. Furthermore, since the bracket 54 can be provided at the bend section 52A in the bracketed resin pipe 50, there is greater flexibility for deciding a fixing position of the resin pipe 52 when designing the attachment target for the resin pipe 52, thereby enabling a greater degree of freedom for the design of the attachment target of the resin pipe 52 than for example resin pipes in which a bracket can only be provided at a straight section.

Exemplary embodiments of the present disclosure have been described using the above exemplary embodiment as an example. However, this exemplary embodiment is merely an example, and various modifications may be implemented within a range not departing from the spirit of the present disclosure. Moreover, obviously the scope of rights of the present disclosure is not limited to the above exemplary embodiment.

The following supplements are disclosed in relation to the above exemplary embodiment.

### Supplement 1

A fixing member-attached resin pipe manufacturing method including:
a process of placing a part of a resin pipe inside a mold for molding a fixing member; and
a process of causing a molten resin to flow into the mold so as to mold the fixing member in a state in which the resin pipe is pressurized from an inside of the resin pipe by supplying a fluid into the resin pipe.

The fixing member-attached resin pipe manufacturing method of supplement 1 includes the process of placing a part of the resin pipe inside the mold for molding the fixing member, and the process of causing the molten resin to flow into the mold so as to mold the fixing member in the state in which the resin pipe is pressurized from the inside thereof by supplying the fluid into the resin pipe.

In the fixing member-attached resin pipe manufacturing method of supplement 1, first, a part of the resin pipe is placed inside the mold for molding the fixing member. Next, the molten resin is made to flow into the mold so as to mold the fixing member in the state in which the resin pipe is pressurized from the inside thereof by supplying the fluid into the resin pipe. The resin pipe is then taken out of the mold to produce the manufactured fixing member-attached resin pipe.

Note that in this manufacturing method, the molten resin is caused to flow into the mold in the state in which the resin pipe is pressurized from the inside thereof. Thus, even if the part of the resin pipe that has been placed inside the mold softens due to heat inside the mold, deformation of this part of the resin pipe due to the inflow pressure of the molten resin is better suppressed than for example manufacturing methods in which a part of a resin pipe that has both ends exposed to the atmosphere is placed inside the mold and the molten resin is made to flow into the mold. Thus, by pressurizing the resin pipe from the inside thereof by supplying the fluid into the resin pipe when molding the fixing member to the resin pipe, the above-described manufacturing method enables deformation of the resin pipe to be suppressed without employing a mandrel.

### Supplement 2

The resin pipe manufacturing method of supplement 1, wherein the resin pipe is pressurized and also cooled from the inside of the resin pipe by supplying the fluid into the resin pipe.

In the fixing member-attached resin pipe manufacturing method of supplement 2, the resin pipe is pressurized and also cooled from the inside thereof by supplying the fluid into the resin pipe, thereby suppressing softening of the part of the resin pipe that has been placed inside the mold due to heat inside the mold. This enables deformation of the resin pipe when molding the fixing member to the resin pipe to be further suppressed.

### Supplement 3

The fixing member-attached resin pipe manufacturing method of supplement 2, wherein the part of the resin pipe is placed inside the mold in a state in which the resin pipe is pressurized and has also been cooled from the inside of the resin pipe.

In the fixing member-attached resin pipe manufacturing method of supplement 3, the part of the resin pipe is placed inside the mold in the state in which the resin pipe is pressurized and has also been cooled from the inside thereof by supplying the fluid into the resin pipe. Thus, softening of the part of the resin pipe placed inside the mold is suppressed from an initial placement stage, unlike for example manufacturing methods in which the resin pipe is pressurized and also cooled from the inside thereof after the part of the resin pipe has been placed inside the mold. This enables deformation of the resin pipe when molding the fixing member to the resin pipe to be further suppressed.

### Supplement 4

The fixing member-attached resin pipe manufacturing method of any one of supplement 1 to supplement 3, wherein:
a bend section is formed at the resin pipe; and
the fixing member is molded to the bend section.

In the fixing member-attached resin pipe manufacturing method of supplement 4, the fixing member is molded to the bend section of the resin pipe. Thus, positional misalignment of the fixing member with respect to the resin pipe (positional misalignment in an axial direction and a circumferential direction of the resin pipe) is suppressed both when the fixing member is taken out from inside the mold, and after the resin pipe has been attached to an attachment target using the fixing member. Moreover, in the fixing member-attached resin pipe in which the fixing member is provided at the bend section, positional misalignment of the fixing member with respect to the resin pipe is suppressed, thereby facilitating an attachment operation to the attachment target.

### Supplement 5

The fixing member-attached resin pipe manufacturing method of any one of supplement 1 to supplement 4, wherein a projecting portion that projects out from an outer periphery of the resin pipe is provided at a section of the resin pipe at which the fixing member is to be molded.

In the fixing member-attached resin pipe manufacturing method of supplement 5, the projecting portion that projects out from the outer periphery of the resin pipe is provided at the section of the resin pipe at which the fixing member is to be molded. Thus, positional misalignment of the fixing member with respect to the resin pipe (positional misalignment in the axial direction and the circumferential direction of the resin pipe) is suppressed both when the fixing member is taken out from inside the mold, and after the resin pipe has been attached to an attachment target using the fixing member. Moreover, in the fixing member-attached resin pipe in which the projecting portion is provided at the section of the resin pipe at which the fixing member is formed, positional misalignment of the fixing member with respect to the resin pipe is suppressed, thereby facilitating an attachment operation to the attachment target.

### Supplement 6

The fixing member-attached resin pipe manufacturing method of supplement 5, wherein plural of projecting portions are formed so as to be spaced apart in a circumferential direction of the resin pipe.

In the fixing member-attached resin pipe manufacturing method of supplement 6, the plural projecting portions are provided at the section of the resin pipe at which the fixing member is to be molded so as to be spaced apart in the circumferential direction of the resin pipe. Thus, positional misalignment of the fixing member with respect to the resin pipe (positional misalignment in the axial direction and the circumferential direction of the resin pipe) is further suppressed both when the fixing member is taken out from inside the mold, and after the resin pipe has been attached to an attachment target using the fixing member. Moreover, in the fixing member-attached resin pipe in which the plural projecting portions are provided at the section of the resin pipe at which the fixing member is formed, positional misalignment of the fixing member with respect to the resin pipe is further suppressed.

### Supplement 7

A fixing member-attached resin pipe manufacturing device including:
a mold for molding a fixing member to a part of a resin pipe; and
a pressurization device configured to supply a fluid into the resin pipe so as to pressurize the resin pipe from an inside of the resin pipe.

In the fixing member-attached resin pipe manufacturing device of supplement 7, the fixing member is molded to the resin pipe by placing a part of the resin pipe inside the mold for molding the fixing member, and causing a molten resin to flow into the mold in a state in which the resin pipe is pressurized from the inside thereof by supplying the fluid into the resin pipe using the pressurization device. The resin pipe is then taken out of the mold to produce the manufactured fixing member-attached resin pipe.

Note that in this manufacturing device, the molten resin can be caused to flow into the mold in the state in which the resin pipe is pressurized from the inside thereof using the pressurization device. Thus, even if the part of the resin pipe that has been placed inside the mold softens due to heat inside the mold, deformation of this part of the resin pipe due to the inflow pressure of the molten resin is better suppressed than for example manufacturing devices in which the molten resin is caused to flow into the mold in a state in which a part of a resin pipe that has both ends exposed to the atmosphere has been placed inside the mold without employing a pressurization device. Thus, by pressurizing the resin pipe from the inside thereof by supplying the fluid into the resin pipe using the pressurization device when molding the fixing member to the resin pipe, the above-described manufacturing device enables deformation of the resin pipe to be suppressed without employing a mandrel.

### Supplement 8

The fixing member-attached resin pipe manufacturing device of supplement 7, wherein the pressurization device includes:
a supply section configured to supply the fluid for cooling into the resin pipe from one end portion of the resin pipe; and
an adjustment section configured to expel the fluid inside the resin pipe from another end portion of the resin pipe so as to adjust a pressure inside the resin pipe.

In the fixing member-attached resin pipe manufacturing device of supplement 8, the cooling fluid is supplied into the resin pipe from the one end portion of the resin pipe by the supply section of the pressurization device, and the fluid inside the resin pipe is expelled from the other end portion of the resin pipe by the adjustment section so as to adjust the pressure inside the resin pipe. Note that in this manufacturing device, the molten resin can be caused to flow into the mold in the state in which the cooling fluid has been supplied into the resin pipe by the pressurization device such that the resin pipe is pressurized and has also been cooled from the inside thereof. This suppresses softening of the part of the resin pipe that has been placed inside the mold due to the heat inside the mold. This enables deformation of the resin pipe when molding the fixing member to the resin pipe to be further suppressed.

### Supplement 9

A fixing member-attached resin pipe including:
a resin pipe formed with a bend section; and
a fixing member provided at the bend section,
the fixing member including a ring-shaped section that is ring shaped and has an inner peripheral face that is in close contact with an outer peripheral face of the bend section.

In the fixing member-attached resin pipe of supplement 9, since the fixing member can be provided at the bend section of the resin pipe, there is greater flexibility for deciding a fixing position of the resin pipe when designing an attachment target for the resin pipe, thereby enabling a greater degree of freedom for the design of the resin pipe attachment target than for example resin pipes in which the fixing member can only be provided at a straight section thereof. Moreover, in this fixing member-attached resin pipe, since the inner peripheral face of the ring-shaped section of the fixing member is in close contact with the outer peripheral face of the bend section of the resin pipe, positional misalignment of the fixing member with respect to the resin pipe (positional misalignment in the axial direction and the circumferential direction of the resin pipe) can be suppressed, even without providing a structure to prevent positional misalignment.

Note that the entire content of the disclosure of Japanese Patent Application No. 2019-154743 filed on August 27, 2019 is incorporated by reference in the present specification.

All cited documents, patent applications, and technical standards mentioned in the present specification are incorporated by reference in the present specification to the same extent as if each individual cited document, patent application, or technical standard was specifically and individually indicated to be incorporated by reference.

## Claims

1. A fixing member-attached resin pipe manufacturing method comprising:
a process of placing a part of a resin pipe inside a mold for molding a fixing member; and
a process of causing a molten resin to flow into the mold so as to mold the fixing member in a state in which the resin pipe is pressurized from an inside of the resin pipe by supplying a fluid into the resin pipe.

2. The resin pipe manufacturing method of claim 1, wherein the resin pipe is pressurized and also cooled from the inside of the resin pipe by supplying the fluid into the resin pipe.

3. The fixing member-attached resin pipe manufacturing method of claim 2, wherein the part of the resin pipe is placed inside the mold in a state in which the resin pipe is pressurized and has also been cooled from the inside of the resin pipe.

4. The fixing member-attached resin pipe manufacturing method of any one of claim 1 to claim 3, wherein:
a bend section is formed at the resin pipe; and
the fixing member is molded to the bend section.

5. The fixing member-attached resin pipe manufacturing method of any one of claim 1 to claim 4, wherein a projecting portion that projects out from an outer periphery of the resin pipe is provided at a section of the resin pipe at which the fixing member is to be molded.

6. The fixing member-attached resin pipe manufacturing method of claim 5, wherein a plurality of projecting portions are formed so as to be spaced apart in a circumferential direction of the resin pipe.

7. A fixing member-attached resin pipe manufacturing device comprising:
a mold for molding a fixing member to a part of a resin pipe; and
a pressurization device configured to supply a fluid into the resin pipe so as to pressurize the resin pipe from an inside of the resin pipe.

8. The fixing member-attached resin pipe manufacturing device of claim 7, wherein the pressurization device includes:
a supply section configured to supply the fluid for cooling into the resin pipe from one end portion of the resin pipe; and
an adjustment section configured to expel the fluid inside the resin pipe from another end portion of the resin pipe so as to adjust a pressure inside the resin pipe.

9. A fixing member-attached resin pipe comprising:
a resin pipe formed with a bend section; and
a fixing member provided at the bend section,
the fixing member including a ring-shaped section that is ring shaped and has an inner peripheral face that is in close contact with an outer peripheral face of the bend section.
